# EUROPEAN PATENT APPLICATION

(11) **EP 1 917 861 A1**
(43) Date of publication of application: **07.05.2008**
(21) Application number: 06122505.8
(22) Date of filing: 18.10.2006
(51) Int. Cl.: A23C 19/05, A23J 1/20

(54) **Cheese with added whey protein agglomerates**

(71) Applicant: Campina Nederland Holding B.V., 5301 LB Zaltbommel (NL)
(72) Inventor: Frusch, Joseph Agnes Hubert, 5212 NC, 's-Hertogenbosch (NL); Kokx, Jan Johannes Maria Petrus, 5131 GE, Alphen NB (NL)
(74) Representative: van Westenbrugge, Andries

(57) **Abstract**

The invention concerns a shaped cheese of the semi-hard type, which contains at least 3 wt.%, on total protein basis, of denatured whey protein agglomerates. The content of whey protein agglomerates can be up to e.g. 15 wt.%, on total protein basis, preferably between 3.5 and 10 wt.%, most preferably between 4 and 8 wt.%. It was found that such a cheese allows a more economical use of all milk components, without any negative effect on the properties of the cheese in terms of taste, flavour, and consistency.

## Description

The present invention relates to cheese of the hard or, especially, semi-hard type, such as Gouda, Maasdam, Milner, and the like, having an adjusted protein composition. The new cheese allows more economic use of milk constituents, while maintaining full quality in terms of taste, flavour and consistency.

### Background

EP-A 427 307 discloses low fat cheese wherein a part of the fat has been replaced by denatured whey protein particles. Therein, sweet whey from cheese manufacture may be processed to produce denatured whey aggregated proteins which may then be recycled to the cheese milk. The size of the particles depends on the type of cheese: for soft cheese the average particle size is below 2 µm, while for hard and semi-hard-cheese the average particle size is between 2 and 20 µm. The fat content is 31-32% on dry matter. As shown in the table therein, the flavour of this cheese is clearly inferior to 48+ cheese.

The use of microparticulate whey proteins having a particle size below 10 µm, has been known for several years for producing low-fat cheeses, e.g. from US 6,767,575, EP 963 700, and EP 629 349. These publications concern the replacement of milk fat by denatured whey protein particles. Therein, it makes sense to minimise the size of fat globules to 0.1- 10 µm (Walstra et al. Dairy Technology p. 6). In Spiegel & Huss "Whey protein aggregates under shear" Int. J. Food Sci. and Technology 37 (2002) 559 - 568 it is concluded that aggregate diameters between 0.5 and 10 µm are advantageous for achieving a smooth mouth-feeling and for facilitating for example the incorporation of whey proteins in a cheese matrix. It is an object of the invention to produce a cheese of the semi-hard type having the organoleptic and textural properties as appreciated by the customers, but allowing a more economic use of the milk constituents.

### Description of the invention

The invention concerns a shaped cheese of the semi-hard type, which contains at least 3 wt.%, on total protein basis, of denatured whey protein agglomerates. The content of whey protein agglomerates can be up to e.g. 15 wt.%, on total protein basis, preferably between 3.5 and 10 wt.%, most preferably between 4 and 8 wt.%. It was found that such a cheese allows a more economical use of all milk components, without any negative effect on the properties of the cheese in terms of taste, flavour, and consistency.

A semi-hard type cheese is understood to comprise cheese of the Gouda, Edam and Maasdam types, and includes Milner types. The final cheese can have a fat content of between 10 and 55 wt.%, on dry matter basis. The invention particularly concerns a cheese containing the whey protein agglomerates, of normal and medium fat contents, e.g. between 30 and 55 wt.% of fat on dry matter basis. A normal-fat cheese having a fat content of at least 35% is particularly preferred, since casein displacement and not fat substitution is considered as the invention. The amounts of casein which can be replaced are the highest for medium-fat cheese, and the additional moisture introduced with the whey protein agglomerates imposes less of a problem.

The denatured whey protein agglomerates preferably show a Gaussian particle size distribution. The size distribution of the whey protein agglomerates is such that the amount of whey protein agglomerates having a size below 10 µm is preferably below 15 wt%, more preferably below 10 wt%. The fraction of particles having a size of less than 7 µm is preferably less than 10 wt%, more preferably less than 8 wt%. The size distribution may also be characterised by a d(0.9) value between 50 and 80 µm, i.e. the value of the particle size at 90 vol% of the population has a diameter within this particular range.

The whey protein agglomerates of the invention may further contain particles up to 150 µm, as determined by laser diffraction (Malvern Instruments). This corresponds to the findings in NL-A-1024367, where cheese curd particles may be regenerated with the curd after mechanical refining. There, curd particles sized up to 250 µm were reported not to distort cheese consistency. Since, in the present case, larger amounts of proteins are applied, it is preferred to limit the size of the agglomerates to 150 µm.

The particle size distribution of the whey protein agglomerates may also be characterised by the span of the Gaussian size distribution. The span is calculated by the difference in diameter at 90 vol% and 10 vol% of the cumulated distribution, divided by the median: [d(0.9) - d(0.1)] / d(0.5). The span is typically between 1.2 and 2.2, more preferably 1.4 - 2.0.

The whey protein agglomerates may also be characterised in terms of their average size. The agglomerates typically have an average particle size of more than 20 µm. The average particle size can be as high as 100 µm, although a maximum average particle size of 75 µm is preferred.

The invention thus especially concerns a shaped cheese of the semi-hard type, containing at least 3 wt%, on protein basis, of denatured whey protein agglomerates, wherein the agglomerates have an average particle size of between 20 µm and 100 µm.

In addition, or alternatively, the invention pertains to a shaped cheese of the semi-hard type, containing at least 3 wt.%, on protein basis, of denatured whey protein agglomerates, wherein the agglomerates have less than 15 wt% of the average particle size less than 10 µm.

The invention further pertains to a shaped cheese of the hard or semi hard type having a fat content of between 35 and 55 wt.%, on dry matter basis, wherein the cheese contains at least 3 wt.% (on protein basis) of denatured whey protein agglomerates. These whey protein agglomerates may be characterized by an average size of between 20 µm and 100 µm and/or a fraction of less than 15 wt% having a size less than 10 µm.

In an especially preferred embodiment, at least 65 wt%, preferably at least 75 wt%, most preferably at least 85 wt% of the agglomerates has an average particle size of more than 10 µm, i.e. less than 35 wt%, more preferably less than 25 wt%, most preferably less than 15 wt% has a particle size below 10 µm. Furthermore, at least at least 55 wt%, more preferably at least 65 wt%, or even at least 80 wt% of the particles has a particle size above 20 µm. Alternatively or in addition, at least 75 wt%, preferably at least 90% of the agglomerates has a particle size of below 75 µm. The amount of whey protein agglomerates having a dimension larger than 100 µm is preferably less than 15 wt%. The average particle size is preferably between 25 and 70 µm. In a particular embodiment, the average particle size is between 40 and 65 µm.

Although the invention is not considered to be limited by any theory, the beneficial effect of the agglomerates of the invention is ascribed to the extent to which these agglomerates may be incorporated in the rennet gel. According to Walstra et al. Dairy Science and Technology, publisher Marcel Dekker (1999) p. 155 - 156, the size of the largest pores in the rennet gel are approximately 10 µm. From this number one may conclude that the vast majority of whey protein aggregates which have a diameter above 10 µm have a good chance of being trapped in the gel, and are thus able to replace proteins (rather than fat, as is generally the focus in the literature).

In addition, the size of the whey protein aggregates advantageously avoids sedimentation of particles during the rennet coagulation of the milk. The particle size of the invention is also advantageous for economic reasons: large particles which still escape the cheese curd during processing, are more easily recovered by conventional whey clarifiers than smaller ones. As the efficiency of these clarifiers decreases particularly below 7 µm, large-sized particles are desirable.

The cheese according to the invention is characterised by having a protein composition corresponding to about 85-97 wt. % casein, and 3-15 wt.% whey protein. In particular, the cheese has an amino acid profile with an increased level of valuable amino acids cysteine, tryptophan and lysine. Thus, on protein basis, the total cysteine content of the cheese is preferably between 0.50 and 0.80 wt.%, more preferably between 0.54 and 0.70 wt.%; the tryptophan content is preferably between 1.45 and 1.65, more preferably between 1.48 and 1.60 wt.%; and the lysine content is preferably between 8.40 and 8.90, more preferably between 8.45 and 8.70. In particular, the cheese is substantially free of glycomacropeptide (GMP), i.e. less than 1%, or even less than 0.5% on protein weight basis.

The invention furthermore relates to a process of producing a cheese of the semi-hard type, comprising adding to the cheese milk a whey protein agglomerate as described above. The amount of whey protein agglomerate can vary from about 2.5 wt.% (with respect to the protein content of the cheese milk) up to about 10 wt.% or even up to 15 wt.%, although the preferred amount is between 3 and 8 wt.%.

The (partial) inclusion of watery whey protein agglomerates has its effect on the scalding temperature. A rule of thumb is that for each percent of denatured whey protein agglomerates added to the milk, the scalding temperature has to be increased with 0.15-0.3°C, provided that there is a maximum scalding temperature of 38 °C, preferably as low as 36.5 °C, due to use of mesophilic starters in semi-hard cheese production. For the cheeses of the hard type, especially the semi-hard type, maximum conventional scalding temperature is approximately 34°C. In the present invention, the scalding temperature is typically raised to at least 34.5 °C, more preferably at least 35 °C.

The whey protein agglomerate can be obtained by treatment of whey, including denaturation, which treatment advantageously comprises the following steps:
- concentrating whey protein to a protein content between 4 and 5 wt.%;
- heating the concentrate to a temperature of at least 90°C for between 1 and 15 min, preferably 1 - 3 min, preferably at pH 4.5 - 7, more preferably at pH 6.0 - 6.7;
- optionally subjecting the concentrate to an UHT treatment of about 120 °C for 3 s; and
- cooling the heated concentrate to below 10°C.
In the process of the invention, a separate homogenisation step can be avoided, and is preferably omitted. Where the source of whey protein is acid whey, the UHT treatment is superfluous. In the case of acid whey processing no mesophilic starters are used, so no bacteriophage contamination takes place.

Concentration of the whey is preferably effected using ultrafiltration, e.g. using a membrane having a cut-off value of 10,000Da. The ultrafiltration concentrate has a protein content of no more than 5 wt%, a lactose content of between 3 and 5 wt%, based on the weight of the concentrate, and a pH between 6 and 7.

The heating step is preferably be performed at 90-95°C for about 2 minutes. It is preferred to use a (single stage) scraped heat exchanger for heating to 90-95°C. An example of such a heat exchanger is the one available form Gerstenberg & Agger, type Labo-Perfector, Copenhagen, DK, 1200 rpm. The heating step can also be carried out in a batch process under stirring. The heating of the concentrate can be carried out by means of a single stage scraped surface heat exchanger or in batch process, while stirring.

In principle, it is possible to use whey protein powder as a source, although it may result in off flavours. However, it is preferred to use "fresh" whey as the whey protein source.

In a preferred embodiment the whey proteins are derived from sweet whey, i.e. the whey obtained by draining from a cheese produced by normal renneting. The choice for sweet whey may be economically driven, for reasons of recycling.

However, it is preferred to use acid whey, i.e. the whey obtaining by acid precipitation of casein. The use of acid whey, in which GMP is substantially absent, results in a higher proportion of denaturation, at least 90% of the proteins, compared to 70 % in case of cheese whey. Using 80 % incorporation of denatured whey protein, the net result in case of acid whey is 72 % and for sweet whey this value is 56 %.

If a cheese is prepared by freezing and slicing to a thickness of 15 µm, the presence and size of denatured whey protein agglomerates in the cheese slice can be detected after colouring with methylene blue, using a microscope (Nikon Eclipse E600; Leica Q500IW picture analysis). Domains of a diameter of approximately 15 µm and higher can be detected.

### Examples

### Example 1

Fresh, acid whey, a by-product of casein manufacture, was ultrafiltered with an industrial installation (Hydranautics membranes-spiral wound system equipped with high flux, high protein rejection 10kDa PES membranes GEA liquid processing Scandinavia A/S Skanderborg DK) to a whey protein concentrate (4.3% protein). After ultrafiltration the pH was adjusted to pH 6.1 with a caustic solution. The whey protein concentrate (WPC) was heated by a plate heat exchanger to 74°C, followed by a single-stage scraped surface heat exchanger in which heating to 92°C took place. The holding time was 2 minutes. Subsequently the concentrate was buffered at 7°C. In a following step an UHT treatment was carried out for microbiological reasons (120°C/3 sec).

After cooling below 10°C, the denatured whey protein concentrate {d (0.9): 72.6 µm, 9.0% < 10 µm, span (10-90%): 1.92} was added to the cheese milk. After addition-4.0%, based on the protein amount of the milk - the protein content was 3.42%, while the reference cheese milk contained 3.29%. Both reference milk (3.50% fat) and WPC enriched milk (3.47% fat) were treated according to the process described by Walstra et al. (Dairy Technology p. 671). In both cases the mesophilic starter BOS (CSK food enrichment, Leeuwarden, The Netherlands) was applied at a dosage rate of 0.5%. The scalding temperature of the reference cheese was 34.0°C and that of the WPC enriched cheese 34.9°C.

After brining, the reference cheese had the following composition: 43.2% moisture, 50.6% fat on total solids, 3.3% NaCl on total solids and pH 5.18, while the results of the WPC enriched cheese were respectively 43.5%, 50.3%, 3.4% and 5.17. The Gouda cheeses were assessed organoleptically by a panel of 7 experts on a scale 4-8 (4= bad, 5= moderate, 6= normal, 7= good, 8= excellent) when the cheese was of an age of 4 and 7 weeks. The results are shown in table 1.

**Table 1: Organoleptic assessment of WPC enriched Gouda cheese (acid whey)**

| | Age 4 weeks | | Age of 7 weeks | |
|---|---|---|---|---|
| | Flavor | Consistency | Flavor | Consistency |
| Reference cheese | 5.9 mild | 6.6 (smooth mouth-feeling) | 6.3 (mild) | 6.5 (smooth mouth-feeling) |
| Acid WPC enriched cheese | 5.7 mild | 6.6 (smooth mouth-feeling) | 6.3 (mild) | 6.6 (smooth mouth-feeling) |

The protein efficiency calculation was based on the protein content of the milk and that of the (1^{st}) whey; for the reference, the value was 77.07% and for acid WPC enriched milk 76.54%. The curd fines before and after the clarifier were for the reference 303 mg/l and 10 mg/l whey, respectively. In case of the acid WPC enriched cheese these values were 384 and 11 mg/l whey, respectively. The overall efficiency was 78.0% for the reference and 77.4% for the acid WPC enriched cheese.

### Example 2

See example 1, however, instead of acid whey here sweet cheese whey was ultrafiltered (Nadir installation, 20 kDa PES membranes) to a WPC. The concentrate (4.0% protein) was heated in a single-stage scraped surface heat exchanger under continuous stirring at 90°C during 15 minutes. The pH of the whey was 6.6.

After UHT treatment and cooling the sweet WPC {d (0.9): 55.1 µm, 13% < 10 µm, span (10-90%): 1.99} was added to the cheese milk. After addition to the cheese milk-4.75% based on the protein in the milk - the protein content was 3.29%, while the reference cheese milk contained 3.14% protein content. In both cases 0.5% of a mesophilic starter (BOS) was applied. The scalding temperature of the reference cheese was 34°C and that of the WPC enriched cheese 34.9°C. After brining the reference cheese had the following composition: 44.7% moisture, 50.6% fat on total solids, 3.8% NaCl on the total solids and pH 5.13, while the results of the WPC enriched cheese were respectively 44.7%, 50.5%, 3.8% and pH 5.13.

The Gouda cheeses were assessed at an age of 4 and 8 weeks. The results are shown in table 2.

**Table 2: Organoleptic assessment of WPC enriched cheese (sweet cheese whey)**

| | Age of 4 weeks | | Age of 8 weeks | |
|---|---|---|---|---|
| | Flavor | Consistency | Flavor | Consistency |
| Reference cheese | 6.4 sl. acid | 6.7 (smooth mouth-feeling) | 5.8 sl. acid | 6.4 (smooth mouth-feeling) |
| Sweet WPC enriched cheese | 6.5 sl. acid | 6.7 (smooth mouth-feeling) | 6.3 mild | 6.4 (smooth mouth-feeling) |

The protein efficiency calculation indicated for the reference a value of 78.03% and the sweet WPC enriched cheese 76.54%. The curd fines before and after the clarifier were for the reference 159 and 43 mg/l whey, respectively. In the case of the sweet WPC enriched cheese the figures were 359 and 67 mg/l whey, respectively. The overall protein efficiency was for the reference 78.4% and for the sweet WPC enriched cheese 77.5%.

### Example 3

The particle size (distribution) of whey protein agglomerates as obtained by the above-mentioned recipes of heating in a scraped surface heat exchanger at 92 °C in examples 1 and 3 are compared to the characteristics of agglomaretes prepared in a batch process, and by a 2 step homogenizer (at 40 and 10 bar). The relevant properties are summarized in table 3.

**Table 3: Particle properties dependent on WPC preparation process**

| | Cheese whey WPC (pH 6.6) | | | Acid whey WPC |
|---|---|---|---|---|
| Particle properties | SSHE-HM 92°C - 2min | SSHE 92°C - 2min (example 2) | Batch 90°C - 15min | SSHE pH 6.1 / 92°C - 2min (example 1) |
| < 10 µm | 79% | 13% | 4% | 9% |
| < 7 µm | 55% | 7% | 2.5% | 6% |
| d(0.9) | 12.5 µm | 55.1 µm | 103.8 µm | 72.6 µm |
| Average size | 6.6 µm | 23.5 µm | 56,3 µm | 32.3 µm |
| > 100 µm | none | 3% | 10% | 4 % |
| Span | 1.35 | 1.99 | 1.40 | 1.92 |

| | | | | |
|---|---|---|---|---|
| SSHE = scraped surface heat exchanger HM = 2 step homogenizer (40/10 bar) | | | | |

## Claims

1. A shaped cheese of the semi-hard type, ***characterised* by** containing at least 3 wt.%, on protein basis, of denatured whey protein agglomerates, the agglomerates having an average particle size of between 20 µm and 100 µm.

2. A shaped cheese of the hard or semi hard type having a fat content of between 35 and 55 wt.%, on dry matter basis, ***characterised* by** containing at least 3 wt.% (on protein basis) of denatured whey protein agglomerates.

3. The cheese according to claim 1 or 2 , wherein the amount of said agglomerates having a size below 10 µm is below 15 wt%.

4. The cheese according to any one of the preceding claims, wherein said agglomerates have a particle size distribution **characterised by** a d(0.9) value between 50 and 80 µm.

5. The cheese according to any one of the preceding claims, wherein at least 50% of said agglomerates have a particle size of more than 30 µm.

6. The cheese according to any one of the preceding claims, containing between 3.5 and 10 wt.%, on protein basis, of said denatured whey protein agglomerates.

7. The cheese according to any one of the preceding claims, having a total cysteine content, on protein basis, of between 0.5 and 0.8 wt.%, preferably between 0.54 and 0.70 wt.%.

8. A process of producing a whey protein agglomerate having an average particle size of between 20 and 100 µm, comprising:
- concentrating whey protein to a protein content between 4 and 5 wt.%;
- heating the concentrate to a temperature of at least 90°C for between 1 and 15 min;
- optionally subjecting the concentrate to an UHT treatment of about 120 °C for 3 s; and
- cooling the heating concentrate to below 10°C,
wherein the process does not comprise a separate homogenisation step.

9. A process of producing a cheese of the semi-hard type, comprising adding to the cheese milk a whey protein agglomerate having an average particle size of between 20 and 100 µm.

10. The process according to claim 9, wherein the whey proteins originate from acid whey.

11. The process according to claim 10, wherein the whey proteins are substantially free of glycomacroprotein.

12. The process according to any one of claims 9-11, wherein 2.5-10, in particular 3-8 wt.% of whey protein agglomerates, on the basis of the protein content of the cheese milk, is added to the cheese milk.

13. The process according to any one of claims 9-12, wherein the whey protein agglomerate is obtained using the process of claim 8.
